# EUROPÄISCHE PATENTANMELDUNG

(11) **EP 2 093 460 A2**
(43) Veröffentlichungstag der Anmeldung: **26.08.2009**
(21) Anmeldenummer: 09153081.6
(22) Anmeldetag: 18.02.2009
(51) Int. Cl.: F16H 45/02

(54) **Hydrodynamische Kopplungseinrichtung, insbesondere Drehmomentwandler**

(30) Priorität: 21.02.2008 DE 102008010277
(71) Anmelder: ZF Friedrichshafen AG, 88038 Friedrichshafen (DE)
(72) Erfinder: Gajda, Christoph, 97421 Schweinfurt (DE); Heuler, Michael, 97080 Würzburg (DE); Reinhardt, Bernd, Farmington Hills, MI 48335 (US); Sueck, Gregor, 97526 Sennfeld (DE); Zerner, Frank, 96120 Bischberg (DE)

(57) **Zusammenfassung**

Eine hydrodynamische Kopplungseinrichtung, insbesondere Drehmomentwandler, umfasst ein mit Fluid gefülltes oder füllbares Gehäuse (12) mit einem Pumpenrad (18), ein in einem Innenraum (22) des Gehäuses (12) angeordnetes Turbinenrad (24), eine Überbrückungskupplungsanordnung (44) mit einer ersten Gruppe (46) von Reibelementen, welche mit dem Gehäuse (12) zur gemeinsamen Drehung um eine Drehachse (A) gekoppelt sind, und einer zweiten Gruppe (48) von Reibelementen, welche mit einem Abtriebsorgan (34) zur gemeinsamen Drehung um die Drehachse (A) gekoppelt sind, wobei die Reibelemente (78, 80) wenigstens einer Gruppe (48) von Reibelementen einen ringscheibenartigen Reibelementenkörper (86, 88) und an wenigstens einer axialen Seite des Reibelementenkörpers (86, 88) eine Reibbelagsanordnung (90, 92, 94, 96) aufweisen, mit welcher die Reibelemente (58, 60, 62) der anderen Gruppe (46) in Reibwechselwirkung bringbar sind, wobei wenigstens ein Teil der Reibbelagsanordnungen (90, 92, 94, 96) der Reibelemente (78, 88) der einen Gruppe (46) von Reibelementen eine Strömungskanalformation (100, 102) zum Durchtritt von Fluid aufweist, und wobei wenigstens eine näher an einem axial zentralen Bereich (108) der einen Gruppe (46) von Reibelementen angeordnete Reibbelagsanordnung (94) eine Strömungskanalformation (100) mit geringerem Strömungswiderstand für das Fluid aufweist, als wenigstens eine näher an einem axialen Endbereich (82, 84) der einen Gruppe (46) von Reibelementen vorgesehene Reibbelagsanordnung (96).

## Beschreibung

Die vorliegende Erfindung betrifft eine hydrodynamische Kopplungseinrichtung, insbesondere Drehmomentwandler, umfassend ein mit Fluid gefülltes oder füllbares Gehäuse mit einem Pumpenrad, ein in einem Innenraum des Gehäuses angeordnetes Turbinenrad, eine Überbrückungskupplungsanordnung mit einer ersten Gruppe von Reibelementen, welche mit dem Gehäuse zur gemeinsamen Drehung um eine Drehachse gekoppelt sind, und einer zweiten Gruppe von Reibelementen, welche mit einem Abtriebsorgan zur gemeinsamen Drehung um die Drehachse gekoppelt sind.

Aus der DE 103 50 935 A1 ist eine als hydrodynamischer Drehmomentwandler aufgebaute hydrodynamische Kopplungseinrichtung bekannt, bei welcher das in einem Innenraum eines Gehäuses angeordnete Turbinenrad über eine Überbrückungskupplungsanordnung und eine Torsionsschwingungsdämpferanordnung wahlweise mit dem Gehäuse zur gemeinsamen Drehung gekoppelt werden kann. Die Überbrückungskupplungsanordnung weist zwei Gruppen von Reibelementen auf. Eine erste Gruppe von Reibelementen ist mit einem gehäusefesten Reibelemententräger zur gemeinsamen Drehung um eine Drehachse gekoppelt, an dem Reibelemententräger jedoch in geringem Ausmaß axial bewegbar. Eine zweite Gruppe von Reibelementen ist über einen Reibelementräger mit einem Eingangsbereich der Torsionsschwingungsdämpferanordnung und über diese mit einer Turbinenradnabe, die grundsätzlich als Abtriebsorgan interpretiert werden kann, gekoppelt.

Die Reibelemente der ersten Gruppe und die Reibelemente der zweiten Gruppe wechseln einander alternierend ab. An den beiden axialen Endbereichen der beiden Gruppen von Reibelementen liegt jeweils ein Reibelement der ersten, also mit dem Gehäuse drehfesten Gruppe von Reibelementen. Eines dieser beiden an den axialen Endbereichen liegenden Reibelemente ist durch ein kolbenartig ausgebildetes Anpresselement direkt belastbar, um dadurch die alternierend angeordneten Reibelemente in Reibwechselwirkung miteinander beaufschlagen zu können. Ein im anderen axialen Endbereich der beiden Gruppen von Reibelementen liegendes Reibelement der ersten Gruppe bildet ein axiales Widerlager, ist also in seinem radial äußeren Bereich über einen Sicherungsring an dem Reibelemententräger und mithin bezüglich des Gehäuses axial abgestützt.

In einem Betriebszustand, in welchem über eine so aufgebaute Überbrückungskupplungsanordnung ein Drehmoment zu übertragen ist, wird insbesondere in Einkuppel- bzw. Auskuppelphasen bzw. in längeren Schlupfphasen, in welchen nur ein Teil des Drehmoments über die Überbrückungskupplungsanordnung übertragen wird, durch die Reibwechselwirkung in denjenigen Oberflächenbereichen, in welchen die Reibelemente der beiden Gruppen von Reibelementen aneinander reiben, Wärme erzeugt. Um diese Wärme möglichst rasch abzuführen, werden die Reibelemente von dem im Gehäuseinnenraum vorhandenen Fluid umströmt. Dabei ist jedoch insbesondere der axial zentrale Bereich der beiden Gruppen von Reibelementen kritisch, da in diesen Bereich das die Außenbereiche der Gruppen von Reibelementen umströmende Fluid schwerer gelangen kann und somit dort auch ein thermisch stärker belasteter Bereich entsteht.

Es ist die Zielsetzung der vorliegenden Erfindung, eine hydrodynamische Kopplungseinrichtung, insbesondere Drehmomentwandler, vorzusehen, bei welcher die thermische Belastung einer Überbrückungskupplungsanordnung gemindert ist.

Gemäß einem ersten Aspekt der vorliegenden Erfindung wird diese Aufgabe gelöst durch eine hydrodynamische Kopplungseinrichtung, insbesondere Drehmomentwandler, umfassend ein mit Fluid gefülltes oder füllbares Gehäuse mit einem Pumpenrad, ein in einem Innenraum des Gehäuses angeordnetes Turbinenrad, eine Überbrückungskupplungsanordnung mit einer ersten Gruppe von Reibelementen, welche mit dem Gehäuse zur gemeinsamen Drehung um eine Drehachse gekoppelt sind, und einer zweiten Gruppe von Reibelementen, welche mit einem Abtriebsorgan zur gemeinsamen Drehung um die Drehachse gekoppelt sind, wobei die Reibelemente wenigstens einer Gruppe von Reibelementen einen ringscheibenartigen Reibelementenkörper und an wenigstens einer axialen Seite des Reibelementenkörpers eine Reibbelagsanordnung aufweisen, mit welcher die Reibelemente der anderen Gruppe in Reibwechselwirkung bringbar sind, wobei wenigstens ein Teil der Reibbelagsanordnungen der Reibelemente der einen Gruppe von Reibelementen eine Strömungskanalformation zum Durchtritt von Fluid aufweist, und wobei wenigstens eine näher an einem axial zentralen Bereich der einen Gruppe von Reibelementen angeordnete Reibbelagsanordnung eine Strömungskanalformation mit geringerem Strömungswiderstand für das Fluid aufweist, als wenigstens eine näher an einem axialen Endbereich der einen Gruppe von Reibelementen vorgesehene Reibbelagsanordnung.

Bei einer derartigen Ausgestaltung einer hydrodynamischen Kopplungseinrichtung ist also dafür gesorgt, dass in einem Bereich, in welchem durch schlechtere Anströmbarkeit für das zirkulierende Fluid die Gefahr einer stärkeren thermischen Belastung entsteht, durch die Verringerung des Strömungswiderstands vermittels entsprechender Ausgestaltung der Strömungskanalformationen im Vergleich zu Bereichen, die grundsätzlich leichter anzuströmen sind, eine stärkere Wärmeabfuhr erzeugt werden kann. Dies ermöglicht es, über die gesamte axiale Dicke der Gruppen von Reibelementen hinweg das Entstehen von Überhitzungszuständen zu vermeiden bzw. eine gleichmäßige thermische Belastung durch gleichmäßige Wärmeenergieabfuhr sicherzustellen.

Dabei kann beispielsweise vorgesehen sein, dass der geringere Strömungswiderstand durch einen größeren Strömungsquerschnitt bereitgestellt ist. Der größere Strömungsquerschnitt wiederum kann unter anderem durch eine größere Anzahl an Strömungskanälen bereitgestellt sein.

Ist die eine Gruppe von Reibelementen mit einer ungeraden Anzahl an Reibelementen aufgebaut, also beispielsweise mit drei Reibelementen, so wird erfindungsgemäß weiter vorgeschlagen, dass ein axial zentrales Reibelement an beiden axialen Seiten Reibbelagsanordnungen mit zueinander im Wesentlichen gleichem Strömungswiderstand für das Fluid aufweist. Somit kann sichergestellt werden, dass an beiden axialen Seiten dieses zentral liegenden Reibelements der einen Gruppe eine gleichmäßige Wärmeenergieabfuhr und somit auch eine gleichmäßige thermische Enlastung entsteht, so dass durch Temperaturunterschiede möglicherweise induzierte Verformungen, die eine Schirmung eines derartigen Reibelements zur Folge haben könnten, vermieden werden.

Die eine Gruppe von Reibelementen ist vorzugsweise die zweite Gruppe von Reibelementen, also die mit dem Abtriebsorgan gekoppelte Gruppe.

Gemäß einem weiteren Aspekt der vorliegenden Erfindung wird die eingangs genannte Aufgabe gelöst durch eine hydrodynamische Kopplungseinrichtung, insbesondere Drehmomentwandler, umfassend ein mit Fluid gefülltes oder füllbares Gehäuse mit einem Pumpenrad, ein in einem Innenraum des Gehäuses angeordnetes Turbinenrad, eine Überbrückungskupplungsanordnung mit einer ersten Gruppe von Reibelementen, welche mit dem Gehäuse zur gemeinsamen Drehung um eine Drehachse gekoppelt sind, und einer zweiten Gruppe von Reibelementen, welche mit einem Abtriebsorgan zur gemeinsamen Drehung um die Drehachse gekoppelt sind, wobei die Reibelemente der beiden Gruppen von Reibelementen durch ein Anpresselement in gegenseitige Reibwechselwirkung beaufschlagbar sind und ein Reibelement der ersten Gruppe von Reibelementen ein axial abgestütztes Widerlager bildet, wobei die Reibelemente wenigstens einer Gruppe von Reibelementen einen mit wenigstens einer axialen Seitenfläche in Reibwechselwirkung mit einem Reibelement der anderen Gruppe von Reibelementen bringbaren ringscheibenartigen Reibelementenkörper umfassen, wobei die axiale Dicke der Reibelemente der einen Gruppe in einem dem Anpresselement nahen axialen Endbereich der einen Gruppe von Reibelemente kleiner ist, als in einem axial zentralen Bereich der einen Gruppe von Reibelementen, und in einem dem Widerlager nahen axialen Endbereich der einen Gruppe von Reibelementen größer ist, als in dem axial zentralen Bereich der einen Gruppe von Reibelementen.

Durch die axiale Staffelung der Dicke der Reibelemente werden insbesondere dann, wenn weiter vorgesehen ist, dass die eine Gruppe von Reibelementen die erste Gruppe von Reibelementen ist, und dabei weiterhin dafür gesorgt ist, dass ein Reibelement der einen Gruppe das Widerlager bildet, verschiedene Effekte in vorteilhafter Weise miteinander kombiniert. Zum einen wird dort, wo eine hohe mechanische Belastung auftritt, nämlich dort, wo ein Reibelement ein Widerlager bildet, durch entsprechend dicke Ausgestaltung für eine hohe mechanische Stabilität und damit eine geringe axiale Verformbarkeit bei Belastung durch das Anpresselement gesorgt. In einem zentralen Bereich ist durch eine vergleichsweise dicke Ausgestaltung eines Reibelements dafür gesorgt, dass aufgrund der entsprechend auch größeren Wärmekapazität kurzzeitig auftretende thermische Belastungen, wie sie bei Ein- bzw. Auskuppelvorgängen auftreten, nicht zu einer übermäßigen Oberflächenerhitzung führen. Die an reibend wirksam werdenden Oberflächen entstehende Wärme kann vergleichsweise schnell in den Innenvolumenbereich eines derartigen Reibelements abgeführt werden. Ein Reibelement der einen Gruppe, das dann an dem dem Anpresselement näheren axialen Endbereich liegt, kann vergleichsweise dünner ausgestaltet werden, da es in diesem Bereich von im Gehäuseinnenraum zirkulierendem Fluid besser umströmbar ist und somit die Gefahr einer Überhitzung hier weniger besteht. Durch diese Dickenstaffelung wird also einerseits der mechanischen Belastung, andererseits auch der thermischen Belastung Rechnung getragen, wobei weiterhin berücksichtigt ist, dass durch eine derartige Dickenstaffelung eine übermäßig große Axialausdehnung vermieden wird.

Bei einer derartigen Ausgestaltung kann weiter vorzugsweise vorgesehen sein, dass das Anpresselement ein Reibelement der einen Gruppe von Reibelementen direkt beaufschlagt. Die bei den erfindungsgemäß vorgesehenen Reibelementen eingesetzten Reibelementenkörper sind vorzugsweise aus Stahlmaterial aufgebaut. Dies stellt eine hohe mechanische Stabilität bei gleichwohl hoher thermischer Kapazität und gutem Wärmeleitverhalten sicher.

Es ist darauf hinzuweisen, dass die beiden vorangehend erläuterten erfindungsgemäßen Aspekte, die zur thermischen Entlastung führen, nämlich die spezielle Ausgestaltung der Strömungskanalformationen einerseits und die Dickenstaffelung von Reibelementen andererseits, jeweils für sich alleine betrachtet zu einer vorteilhaften Ausgestaltung führen und mithin auch unabhängig von dem jeweils anderen Aspekt in einer hydrodynamischen Kopplungseinrichtung realisiert sein können. Selbstverständlich können diese beiden Aspekte auch in Kombination vorgesehen sein, so dass ein weiter optimiertes thermisches Verhalten erlangt werden kann.

Die vorliegende Erfindung wird nachfolgend mit Bezug auf die beiliegenden Figuren detailliert beschrieben es zeigt:
- Fig. 1: eine Teil-Längsschnittansicht einer hydrodynamischen Kopplungseinrichtung;
- Fig. 2: in vergrößerter Ansicht den Bereich der Überbrückungskupplungsanordnung der in Fig. 1 gezeigten hydrodynamischen Kopplungseinrichtung;
- Fig. 3: ein mit einer Reibbelagsanordnung ausgebildetes Reibelement, betrachtet von einer ersten axialen Seiten in perspektivischer Ansicht;
- Fig. 4: das in Fig. 3 gezeigte Reibelement, betrachtet von der anderen axialen Seite in perspektivischer Ansicht.

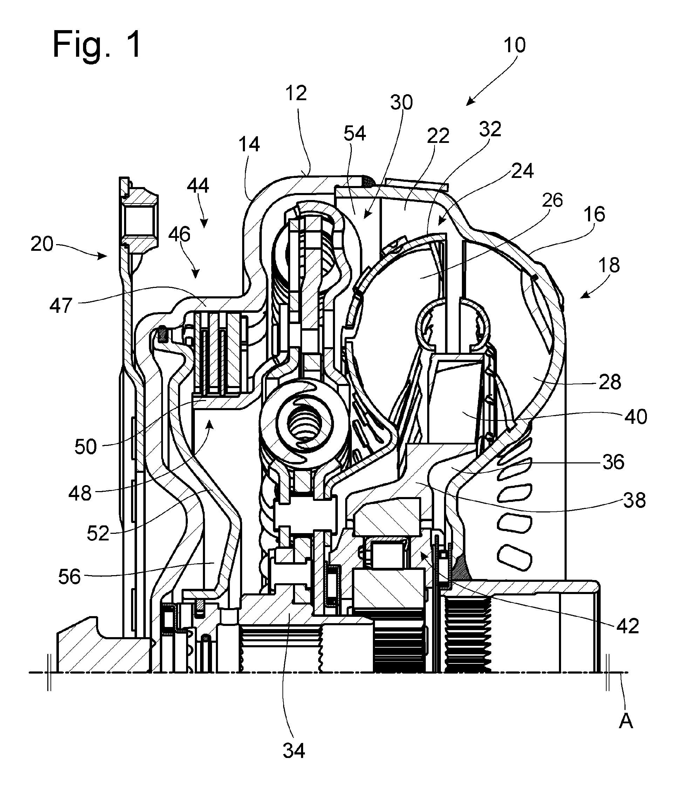

In Fig. 1 ist eine hydrodynamische Kopplungseinrichtung in Form eines hydrodynamischen Drehmomentwandlers allgemein mit 10 bezeichnet. Dieser hydrodynamische Drehmomentwandler umfasst ein Gehäuse 12 mit einer motorseitigen Gehäuseschale 14 und einer getriebeseitigen Gehäuseschale 16, die gleichzeitig auch eine Außenschale für ein Pumpenrad 18 bereitstellt. Die motorseitige Gehäuseschale 14 kann über eine Kopplungsanordnung 20 an ein Antriebsorgan, beispielsweise eine Kurbelwelle einer Brennkraftmaschine angekoppelt und somit mit dieser zur gemeinsamen Drehung um eine Drehachse A gekoppelt werden.

In einem Innenraum 22 des Gehäuses 12 ist ein allgemein mit 24 bezeichnetes Turbinenrad vorgesehen. Dieses liegt mit seinen Turbinenradschaufeln 26 den Pumpenradschaufeln 28 des Pumpenrads 18 axial gegenüber. Über eine allgemein mit 30 bezeichnete und hier zweistufig ausgebildete Torsionsschwingungsdämpferanordnung ist eine die Turbinenradschaufeln 26 tragende Turbinenradschale 32 an eine Turbinenradnabe 34 angekoppelt. Diese Turbinenradnabe 34 wird über Keilverzahnung oder dergleichen mit einer Getriebeeingangswelle gekoppelt und kann somit als Abtriebsorgan interpretiert werden.

Axial zwischen dem Turbinenrad 24 und dem Pumpenrad 18 ist ein Leitrad 36 angeordnet. Die an einem Leitradring 38 getragenen Leitradschaufeln 40 sind über eine Freilaufanordnung 42 auf einer nicht dargestellten Stützhohlwelle so getragen, dass sie in einer Richtung um die Drehachse A rotieren können, gegen Rotation in der anderen Richtung jedoch blockiert sind.

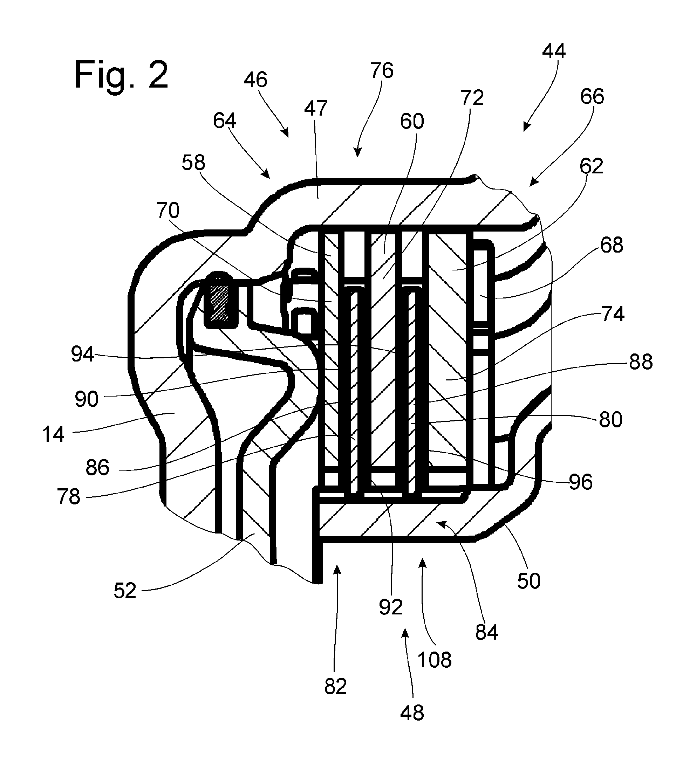

Eine Überbrückungskupplungsanordnung 44 ermöglicht eine direkte mechanische Kopplung des Turbinenrads 24, insbesondere also auch der Turbinenradnabe 34, mit dem Gehäuse 12. Die Überbrückungskupplungsanordnung 44 umfasst, wie nachfolgend mit Bezug auf die Fig. 2 deutlicher noch erläutert, zwei Gruppen 46, 48 von Reibelementen. Die erste Gruppe 46 von Reibelementen ist mit der Gehäuseschale 14 zur gemeinsamen Drehung um die Drehachse A gekoppelt, beispielsweise durch jeweilige Verzahnungsformationen, ist bezüglich der Gehäuseschale 14 jedoch axial bewegbar. Bei dieser Ausgestaltung stellt also die Gehäuseschale 14 einen äußeren Reibelemententräger 47 für die erste Gruppe 46 von Reibelementen bereit. Ein innerer Reibelemententräger 50 trägt die zweite Gruppe 48 von Reibelementen drehfest, beispielsweise ebenfalls über entsprechende Verzahnungsformationen, und stellt über die Torsionsschwingungsdämpferanordnung 30 eine Verbindung mit der Turbinenradnabe 34 her.

Ein als Anpresselement wirksamer Kupplungskolben 52 ist bezüglich des Gehäuses 12 axial bewegbar und unterteilt den Innenraum 22 in einen ersten Raumbereich 54 und einen zweiten Raumbereich 56. Im ersten Raumbereich 54 liegt insbesondere auch die Torsionsschwingungsdämpferanordnung 30, ebenso wie das Turbinenrad 24. Durch Einstellung der Druckverhältnisse in den beiden Raumbereichen 54, 56 bezüglich einander wird es möglich, den Kupplungskolben 52 axial zu verschieben. Wird der Kupplungskolben in der Fig. 1 nach rechts, also in Richtung von einer Brennkraftmaschine oder einem sonstigen Antriebsaggregat weg verschoben, was durch Erhöhung des Fluiddrucks im Raumbereich 56 bezüglich des Fluiddrucks im Raumbereich 54 erfolgt, so beaufschlagt er die beiden Gruppen 46, 48 von Reibelementen gegeneinander und bringt somit die Überbrückungskupplungsanordnung 44 in einen Einrückzustand. Wird der Druck im Raumbereich 56 bezüglich des Raumbereichs 54 gesenkt, bewegt sich der Kupplungskolben 52 wieder zurück auf die Gehäuseschale 14 zu und mindert somit seine Beaufschlagungswirkung, so dass die Überbrückungskupplungsanordnung in Richtung Auskuppeln verstellt wird.

Die Fig. 2 zeigt detaillierter den Aufbau der Überbrückungskupplungsanordnung mit ihren beiden Gruppen 46, 48 von Reibelementen. Die erste Gruppe 46 umfasst im dargestellten Beispiel drei axial gestaffelt liegende Reibelemente 58, 60, 62. Das in einem ersten axialen Endbereich 64 der ersten Gruppe 46 angeordnete Reibelement 48 wird durch den Kupplungskolben 52 unmittelbar beaufschlagt. Das an einem zweiten axialen Endbereich 66 angeordnete Reibelement 62 der ersten Gruppe 46 von Reibelementen ist in axialer Richtung vom Kupplungskolben 52 weg an einem bezüglich der Gehäuseschale 14 arretierten Sicherungsring 68 abgestützt. Das Reibelement 62 bildet also bei Beaufschlagung der beiden Gruppen 46, 48 von Reibelementen ein axiales Widerlager.

Die Reibelemente 58, 60, 62 der ersten Gruppe 46 von Reibelementen sind jeweils mit einem ringscheibenartig ausgebildeten Reibelementenkörper 70, 72, 74 ausgebildet. Dieser Reibelementenkörper 70, 72, 74 ist aus Stahlmaterial aufgebaut und stellt mit jeweils mindestens einer axial gerichteten Oberfläche eine Reibfläche bereit. Man erkennt, dass das in einem axial zentralen Bereich 76 der ersten Gruppe 46 von Reibelementen angeordnete Reibelement 60 mit seinem Reibelementenkörper 72 an beiden axialen Seiten jeweils eine Reibfläche bereitstellt, während die in den beiden axialen Endbereichen 64, 66 der ersten Gruppe 46 von Reibelementen angeordneten Reibelemente 58, 62 nur an ihren zum zentralen Bereich 76 weisenden axialen Seite reibend wirksam sind.

Die zweite Gruppe 48 von Reibelementen weist im dargestellten Beispiel zwei ebenfalls ringscheibenartige Reibelemente 78, 80 auf. Das Reibelement 78 liegt zwischen den beiden Reibelementen 58, 60 der ersten Gruppe 46 von Reibelementen und somit an einem axialen Endbereich 82 der zweiten Gruppe 48 von Reibelementen. Das Reibelement 80 liegt zwischen den beiden Reibelementen 60, 62 der ersten Gruppe 46 von Reibelementen und somit an einem axialen Endbereich 84 der zweiten Gruppe 48 von Reibelementen.

Jedes der beiden Reibelemente 78, 80 der zweiten Gruppe 48 von Reibelementen ist mit einem ringscheibenartig ausgebildeten Reibelementenkörper 86 bzw. 88, beispielsweise wieder aus Stahlmaterial aufgebaut. An den beiden axialen Seiten, an welchen die Reibelemente 78, 80 in Reibwechselwirkung mit den Reibelementen 58, 60, 62 der ersten Gruppe von Reibelementen treten, weisen diese Reibelemente 78, 80 jeweils eine Reibbelagsanordnung 90, 92 bzw. 94, 96 auf.

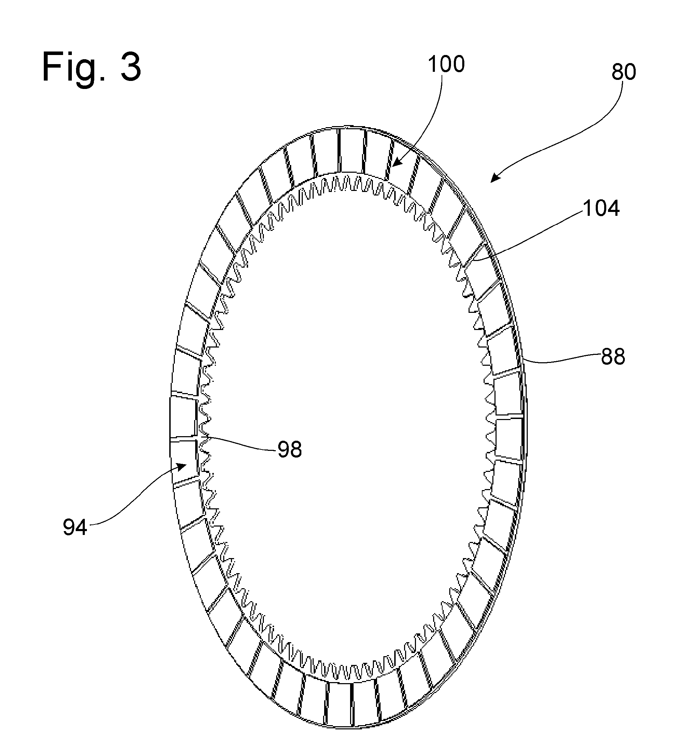

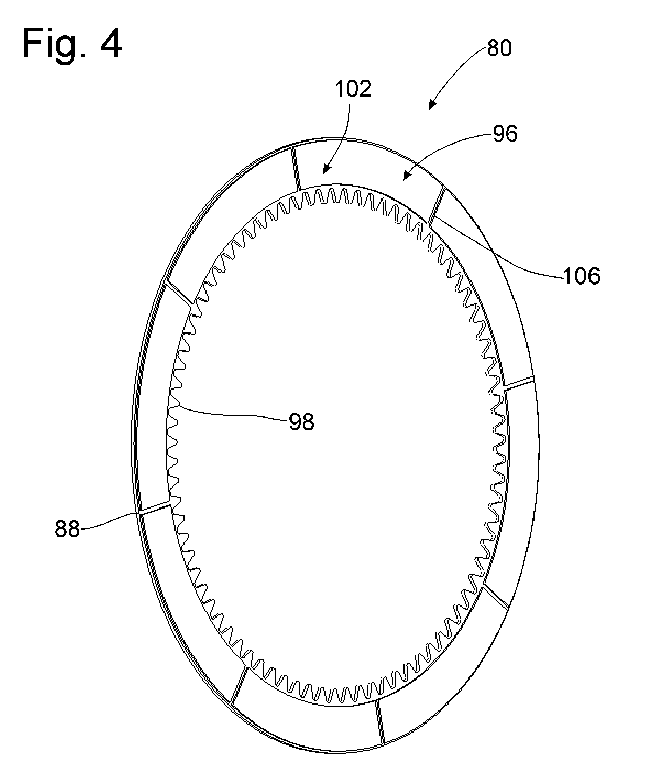

Der Aufbau eines derartigen Reibelements 78 bzw. 80 wird nachfolgend mit Bezug auf die Fig. 3 und 4 erläutert, wo beispielsweise das in der Fig. 2 rechts liegende Reibelement 80 gezeigt ist. Man erkennt den ringscheibenartigen Reibelementenkörper 88 mit der radial innen liegenden Verzahnung 98, mit welcher die drehfeste Ankopplung an den Reibelemetenträger 50 realisiert ist. An den beiden axialen Seiten sind die Reibbelagsanordnungen 94 bzw. 96 erkennbar. Bei jeder dieser beiden Reibbelagsanordnungen 94, 96 ist eine Strömungskanalformation 100 bzw. 102 vorgesehen, über welche im Innenraum 22 des Gehäuses 12 vorhandenes bzw. zirkulierendes Fluid von einem radial äußeren Bereich zu einem radial inneren Bereich oder umgekehrt strömen kann. Auf diese Art und Weise kann durch die Umströmbarkeit bzw. Durchströmbarkeit des Reibelements 80 Reibwärme, die an der reibend wirksam werdenden Oberfläche einer jeweiligen Reibbelagsanordnung 94 bzw. 96 entsteht, durch das zirkulierende Fluid abgeführt werden, auch wenn die Überbrückungskupplungsanordnung 44 im Einrückzustand ist und beispielsweise über eine längere Zeitdauer hinweg im Schlupfzustand betrieben wird.

Man erkennt jedoch in einem Vergleich der Fig. 3 und 4, dass die beiden Strömungskanalformationen 100, 102 sich darin unterscheiden, dass die diese jeweils bildenden einzelnen Strömungskanäle 104 bzw. 106, welche sich im dargestellten Beispiel jeweils radial erstrecken, mit unterschiedlicher Anzahl vorhanden sind. Bei der Reibbelagsanordnung 94 ist eine deutlich größere Anzahl an Strömungskanälen 104 vorhanden, als bei der Reibbelagsanordnung 96 Strömungskanäle 106 vorhanden sind. Dies führt dazu, dass bezogen auf eine jeweilige gesamte Strömungskanalformation 100 bzw. 102 die Strömungskanalformation 100 einen größeren Gesamtströmungsquerschnitt und mithin einen geringeren Gesamtströmungswiderstand für das zirkulierende Fluid bereitstellt, als die Strömungskanalformation 102 bei der Reibbelagsanordnung 96. Aufgrund dieses Umstands wird bei gleichen Druckdifferenzen zwischen radial außen und radial innen die Strömungskanalformation 104 von einer entsprechend größeren Fluidmenge durchströmt werden, als die Strömungskanalformation 102. Dies wiederum führt dazu, dass aus dem Bereich der Reibbelagsanordnung 94 eine größere Wärmeenergiemenge abgeführt wird, als aus dem Bereich der Reibbelagsanordnung 96.

Man erkennt in Fig. 2, dass das Reibelement 80 so in der zweiten Gruppe 48 von Reibelementen angeordnet ist, dass die Reibbelagsanordnung 94, deren Strömungskanalformation 100 einen größeren Gesamtströmungsquerschnitt und mithin einen geringeren Strömungswiderstand aufweist, näher an einem zentralen Bereich 108 der zweiten Gruppe 48 von Reibelementen positioniert ist, als die Reibbelagsanordnung 96, deren Strömungskanalformation 102 den geringeren Gesamtströmungsquerschnitt aufweist. Durch diese Ausgestaltung bzw. Anordnung wird erreicht, dass im axial zentralen Bereich 108 durch Fluidzirkulation mehr Wärmeenergie abgeführt werden kann, als im axialen Endbereich 84. Da dieser axiale Endbereich 84 bzw. das dort auch angeordnete Reibelement 74 der ersten Gruppe 46 von Reibelementen jedoch durch außen um die beiden Gruppen 46, 48 von Reibelementen zirkulierendes Fluid ohnehin besser gekühlt wird, und da auch aus dem axial zentralen Bereich 108 vermehrt Wärmeenergie abgeführt werden kann, wird über die axiale Länge der zweiten Gruppe 48 von Reibelementen eine im Wesentlichen gleichmäßige Wärmeabfuhr und mithin eine im Wesentlichen gleichmäßige thermische Belastung erzeugt. Hierzu ist es selbstverständlich vorteilhaft, das in der Fig. 1 links angeordnete Reibelement 78 mit seinen beiden Reibbelagsanordnungen 90, 92 entsprechend auszugestalten, wie das in den Fig. 3 und 4 gezeigte Reibelement 80. Das heißt, die Reibbelagsanordnung 90 kann eine Strömungskanalformation aufweisen, deren Gesamtströmungsquerschnitt größer ist, als derjenige der Reibbelagsanordnung 92, so dass auch hier in einem dem axial zentralen Bereich 108 näher positonierten Bereich ein geringerer Strömungswiderstand und mithin eine größere Fluidströmungsmenge erreicht wird, als in einem dem axialen Endbereich 82 näher liegenden Bereich, der ohnehin besser von Fluid umströmbar ist. Letztendlich können die beiden Reibelemente 78, 80 zueinander identisch aufgebaut und lediglich seitenverkehrt zueinander eingebaut werden.

Es sei in diesem Zusammenhang darauf hingewiesen, dass selbstverständlich die Strömungskanalformationen 100, 102 in den jeweiligen Reibbelagsanordnungen mit verschiedenster Geometrie bzw. in verschiedenster Weise ausgebildet sein können. So können die einzelnen Strömungskanäle 104 bzw. 106 sich über die gesamte axiale Dicke einer jeweiligen Reibbelagsanordnung hindurcherstrecken, so dass diese in eine Mehrzahl von in Umfangsrichtung aufeinander folgenden Segmenten unterteilt ist. Die Strömungskanäle können jedoch auch eine geringere axiale Tiefe aufweisen, so dass sie sich nur über einen Teilbereich der Reibbelagsanordnungen in axialer Richtung erstrecken und dabei vorzugsweise zu einer Reiboberfläche offen sind, da die Strömungskanäle dann auch axial begrenzt sind durch ein gegenüberliegendes Reibelement der ersten Gruppe 46 von Reibelementen und mithin auch dort Wärme abgeführt werden kann. Selbstverständlich können andere Erstreckungsrichtungen oder Geometrien als die dargestellten für die einzelnen Strömungskanäle vorgesehen sein. Insbesondere können die Strömungskanäle untereinander durch Verbindungskanäle verbunden bzw. vernetzt sein und eine von der radialen Erstreckungsrichtung abweichende Erstreckungsrichtung, insbesondere auch einen gekrümmten Verlauf aufweisen.

Ist die zweite Gruppe 48 von Reibelementen mit einer größeren Anzahl von Reibelementen, beispielsweise mit drei Elementen ausgebildet, so kann vorgesehen sein, dass die an den beiden axialen Endbereichen 82, 84 der zweiten Gruppe 48 von Reibelementen liegenden Reibelemente dann so aufgebaut sind, wie vorangehend mit Bezug auf die Reibelemente 78, 80 beschrieben, während ein im axial zentralen Bereich 108 liegendes Reibelement dann an seinen beiden axialen Seiten beispielsweise mit Reibbelagsanordnungen mit jeweils gleichen Strömungskanalformationen versehen sein kann, die dann jeweils einen vergleichsweise geringen Strömungswiderstand, mithin also eine vergleichsweise große Gesamtströmungsquerschnittsfläche bereitstellen, wie dies beispielsweise im Fall der Strömungskanalformation 100 der Fig. 3 der Fall ist.

Die vorangehend beschriebenen Maßnahmen im Bereich der Ausgestaltung der Reibbelagsanordnungen ist besonders dann effektiv, wenn die Überbrückungskupplungsanordnung 44 über längere Zeit hinweg in einem Schlupfzustand betrieben wird und durch die dann mögliche kontinuierliche, verstärkte Durchströmung der Strömungskanalformationen in den thermisch stärker belasteten Bereichen einer Überhitzung effektiv entgegengewirkt werden kann.

Eine weitere Maßnahme, die bei einer derart ausgebildeten Überbrückungskupplungsanordnung 10 zu einer verbesserten Wärmeabfuhr bzw. einer verminderten Gefahr einer thermischen Überlastung beiträgt, liegt darin, die Reibelemente 58, 60, 62 mit der in Fig. 1 und in Fig. 2 erkennbaren Dickenstaffelung auszugestalten. Dabei ist weiter zu berücksichtigen, dass das am axialen Endbereich 66 angeordnete Reibelement 62 aufgrund der Tatsache, dass es ein axiales Widerlager für die durch den Kupplungskolben 52 ausgeübte Einrückkraft bildet, sehr massiv, also auch mit großer axialer Dicke auszugestalten ist, so dass die Gefahr einer Verformung bei axialer Belastung und einer dadurch möglicherweise induzierten ungleichmäßigen Belastung der verschiedenen reibend miteinander wirksam werdenden Oberflächen vermieden wird. Die sehr massive Ausgestaltung des Reibelements 62 hat zwar den vermeintlich nachteilhaften Effekt, dass der Wärmeübertrag aus dem axialen Endbereich 84 der zweiten Gruppe 48 in das die beiden Gruppen 46, 48 von Reibelementen umströmende Fluid erschwert ist. Gleichwohl stellt das Reibelement 62 mit seinem größeren Volumen eine deutlich vergrößerte Wärmeaufnahmekapazität dar. Dies macht sich vor allem bei Ein- und Ausrückvorgängen vorteilhaft bemerkbar, da durch den sehr schnell verlaufenden Wärmetransport innerhalb eines derartigen Reibelements die an der Oberfläche auftretende bzw. generierte Reibwärme bzw. Reibenergie sehr schnell in den Innenvolumenbereich abgeleitet werden kann.

Das am anderen axialen Endbereich 64 der ersten Gruppe 46 von Reibelementen liegende Reibelement 58 ist mit deutlich geringerer Dicke ausgebildet. Die hier bestehende Dickenanforderung liegt primär darin, dass die vom Kupplungskolben 52 eingeleitete Axiallast im Wesentlichen gleichmäßig auf das axial folgende Reibelement 78 der zweiten Gruppe 48 von Reibelementen übertragen wird. Das Reibelement 58 ermöglicht jedoch durch seine vergleichsweise dünne Ausgestaltung einen sehr effektiven Wärmeabtrag über das an seiner Außenseite, also der vom Reibelement 78 abgewandten Seite strömende Fluid.

Das zwischen den beiden Reibelementen 58 und 62 liegende Reibelement 60 der ersten Gruppe 46 von Reibelementen ist mit einer Dicke vorgesehen, die größer ist als diejenige des Reibelements 58, jedoch kleiner als diejenige des Reibelements 62. Hier ist also unter der Berücksichtigung, dass die gesamte axiale Ausdehnung der beiden Gruppen 46, 48 von Reibelementen möglichst gering gehalten werden soll, gleichwohl ein ausreichend großes Volumen des Reibelements 60 bereitgehalten, das in dem thermisch besonders kritischen zentralen Bereich 76 der ersten Gruppe 46, der grundsätzlich durch das zirkulierende Fluid schlechter anströmbar bzw. umströmbar ist, eine vergleichsweise große Wärmeaufnahmekapazität vorgesehen ist. Die insbesondere bei Ein- bzw. Auskuppelvorgängen generierte Reibwärme kann also vergleichsweise stark im Volumenbereich des Reibelements 60 aufgenommen, also von den Oberflächen abgeleitet werden.

Es ist hier darauf hinzuweisen, dass beispielsweise dann, wenn die erste Gruppe 46 von Reibelementen mit mehr als drei Reibelementen auszugestalten ist, mehrere der zentral liegenden, also zwischen den endseitigen Reibelementen liegenden Reibelemente mit gleicher Dicke ausgebildet sein können. Weiter ist darauf hinzuweisen, dass, wie dies vor allem die beiliegenden Figuren zeigen, die beiden vorangehend beschriebenen Effekte nicht nur für sich alleine in einer Überbrückungskupplungsanordnung realisiert sein können, sondern vorteilhafterweise auch in Kombination vorgesehen sein können, so dass einerseits durch die im zentralen Bereich der beiden Gruppen vorhandene große Wärmeaufnahmekapazität und andererseits durch die verbesserte Durchströmbarkeit dieses zentralen Bereichs eine verbesserte Wärmeabfuhr aus diesem Bereich bzw. eine verringerte Gefahr einer thermischen Überlastung erhalten werden kann.

Grundsätzlich ist darauf hinzuweisen, dass die Erfindungsprinzipien selbstverständlich auch dann realisiert sein können, wenn hinsichtlich der Ausgestaltung die Reibelemente der ersten Gruppe von Reibelementen und die Reibelemente der zweiten Gruppe von Reibelementen bezüglich einander vertauscht sind, also an den Außen-Reibelementen Reibbeläge vorgesehen sind, und an den Innen-Reibelementen keine Reibbeläge vorgesehen sind. Die axiale Abstützung der Einrückkraft innerhalb derjenigen Gruppe, die mit dem Gehäuse zur gemeinsamen Drehung gekoppelt ist, ist deshalb vorteilhaft, da dadurch ein im Einrückzustand ansonsten vorhandener axialer Schub auf das Turbinenrad vermieden werden kann.

## Patentansprüche

1. Hydrodynamische Kopplungseinrichtung, insbesondere Drehmomentwandler, umfassend ein mit Fluid gefülltes oder füllbares Gehäuse (12) mit einem Pumpenrad (18), ein in einem Innenraum (22) des Gehäuses (12) angeordnetes Turbinenrad (24), eine Überbrückungskupplungsanordnung (44) mit einer ersten Gruppe (46) von Reibelementen, welche mit dem Gehäuse (12) zur gemeinsamen Drehung um eine Drehachse (A) gekoppelt sind, und einer zweiten Gruppe (48) von Reibelementen, welche mit einem Abtriebsorgan (34) zur gemeinsamen Drehung um die Drehachse (A) gekoppelt sind, wobei die Reibelemente (78, 80) wenigstens einer Gruppe (48) von Reibelementen einen ringscheibenartigen Reibelementenkörper (86, 88) und an wenigstens einer axialen Seite des Reibelementenkörpers (86, 88) eine Reibbelagsanordnung (90, 92, 94, 96) aufweisen, mit welcher die Reibelemente (58, 60, 62) der anderen Gruppe (46) in Reibwechselwirkung bringbar sind, wobei wenigstens ein Teil der Reibbelagsanordnungen (90, 92, 94, 96) der Reibelemente (78, 88) der einen Gruppe (46) von Reibelementen eine Strömungskanalformation (100, 102) zum Durchtritt von Fluid aufweist, und wobei wenigstens eine näher an einem axial zentralen Bereich (108) der einen Gruppe (46) von Reibelementen angeordnete Reibbelagsanordnung (94) eine Strömungskanalformation (100) mit geringerem Strömungswiderstand für das Fluid aufweist, als wenigstens eine näher an einem axialen Endbereich (82, 84) der einen Gruppe (46) von Reibelementen vorgesehene Reibbelagsanordnung (96).

2. Hydrodynamische Kopplungseinrichtung nach Anspruch 1,
**dadurch gekennzeichnet, dass** der geringere Strömungswiderstand durch einen größeren Strömungsquerschnitt bereitgestellt ist.

3. hydrodynamische Kopplungseinrichtung nach Anspruch 2,
**dadurch gekennzeichnet, dass** der größere Strömungsquerschnitt durch eine größere Anzahl an Strömungskanälen (104, 106) bereitgestellt ist.

4. Hydrodynamische Kopplungseinrichtung nach einem der Ansprüche 1 bis 3,
**dadurch gekennzeichnet, dass** die eine Gruppe (46) von Reibelementen eine ungerade Anzahl an Reibelementen aufweist und dass ein in einem axial zentralen Bereich (108) der einen Gruppe (46) von Reibelementen angeordnetes Reibelement an beiden axialen Seiten Reibbelagsanordnungen mit zueinander im Wesentlichen gleichem Strömungswiderstand für das Fluid aufweist.

5. Hydrodynamische Kopplungseinrichtung nach einem der Ansprüche 1 bis 4,
**dadurch gekennzeichnet, dass** die eine Gruppe (46) von Reibelementen die zweite Gruppe (46) von Reibelementen ist.

6. Hydrodynamische Kopplungseinrichtung, insbesondere Drehmomentwandler, insbesondere nach einem der vorhergehenden Ansprüche, umfassend ein mit Fluid gefülltes oder füllbares Gehäuse (12) mit einem Pumpenrad (18), ein in einem Innenraum (22) des Gehäuses (12) angeordnetes Turbinenrad (24), eine Überbrückungskupplungsanordnung (44) mit einer ersten Gruppe (46) von Reibelementen, welche mit dem Gehäuse (12) zur gemeinsamen Drehung um eine Drehachse (A) gekoppelt sind, und einer zweiten Gruppe (48) von Reibelementen, welche mit einem Abtriebsorgan (34) zur gemeinsamen Drehung um die Drehachse (A) gekoppelt sind, wobei die Reibelemente (58, 60, 62, 78, 80) der beiden Gruppen (46, 48) von Reibelementen durch ein Anpresselement (52) in gegenseitige Reibwechselwirkung beaufschlagbar sind und ein Reibelement (62) der ersten Gruppe (46) von Reibelementen ein axial abgestütztes Widerlager bildet, wobei die Reibelemente (58, 60, 62) wenigstens einer Gruppe (46) von Reibelementen einen mit wenigstens einer axialen Seitenfläche in Reibwechselwirkung mit einem Reibelement (78, 80) der anderen Gruppe (48) von Reibelementen bringbaren ringscheibenartigen Reibelementenkörper (70, 72, 74) umfassen, wobei die axiale Dicke der Reibelemente (58, 60, 62) der einen Gruppe (46) in einem dem Anpresselement (52) nahen axialen Endbereich (64) der einen Gruppe (46) von Reibelemente kleiner ist, als in einem axial zentralen Bereich (76) der einen Gruppe (46) von Reibelementen und in einem dem Widerlager (62) nahen axialen Endbereich (66) der einen Gruppe (46) von Reibelementen größer ist, als in dem axial zentralen Bereich (76) der einen Gruppe (46) von Reibelementen.

7. Hydrodynamische Kopplungseinrichtung nach Anspruch 6,
**dadurch gekennzeichnet, dass** die eine Gruppe (46) von Reibelementen die erste Gruppe (46) von Reibelementen ist.

8. Hydrodynamische Kopplungseinrichtung nach Anspruch 7,
**dadurch gekennzeichnet, dass** ein von dem Anpresselement (52) axial am weitesten entfernt liegendes Reibelement (62) der einen Gruppe (46) von Reibelementen das Widerlager bildet.

9. Hydrodynamische Kopplungseinrichtung nach einem der Ansprüche 6 bis 8,
**dadurch gekennzeichnet, dass** das Anpresselement (52) ein Reibelement (58) der einen Gruppe von Reibelementen direkt beaufschlagt.

10. Hydrodynamische Kopplungseinrichtung nach einem der Ansprüche 1 bis 9,
**dadurch gekennzeichnet, dass** der Reibelementenkörper (70, 72, 74) aus Stahlmaterial aufgebaut ist.
